# EUROPÄISCHE PATENTSCHRIFT

(11) **EP 2 516 857 B1**
(45) Veröffentlichungstag und Bekanntmachung des Hinweises auf die Patenterteilung: **31.07.2013**
(21) Anmeldenummer: 10778914.1
(22) Anmeldetag: 28.10.2010
(51) Int. Cl.: F04B 53/16

(54) **KOLBENPUMPE FÜR EINE HYDRAULISCHE FAHRZEUGBREMSANLAGE**
PISTON PUMP FOR AN HYDRAULIC VEHICLE BRAKING SYSTEM
POMPE À PISTONS POUR UN SYSTÈME DE FREINAGE HYDRAULIQUE POUR VÉHICULE

(30) Priorität: 23.12.2009 DE 102009055228
(43) Veröffentlichungstag der Anmeldung: 31.10.2012
(73) Patentinhaber: Robert Bosch GmbH, 70442 Stuttgart (DE)
(72) Erfinder: JAHN, Heiko, 71732 Tamm (DE); ZIMMERMANN, Marc, 71720 Oberstenfeld (DE); JURETKO, Martin, 31134 Hildesheim (DE); HENNIG, Oliver, 74182 Obersulm (DE)
(86) Internationale Anmeldenummer: PCT/EP2010/066302
(87) Internationale Veröffentlichungsnummer: WO 2011/076467

(56) Entgegenhaltungen:
- DE-A1- 10 232 384
- DE-A1-102004 052 817
- DE-A1-102006 035 055

## Beschreibung

### Stand der Technik

Die Erfindung betrifft eine Kolbenpumpe für eine hydraulische Fahrzeugbremsanlage mit den Merkmalen des Oberbegriffs des Anspruchs 1. Derartige Kolbenpumpen sind von schlupfgeregelten Fahrzeugbremsanlagen bekannt, sie werden auch als Rückförderpumpen bezeichnet.

Eine derartige Kolbenpumpe offenbart die Offenlegungsschrift DE 10 2006 035 055 A1. Die bekannte Kolbenpumpe weist einen Pumpenkolben auf, der in einer Pumpenbohrung zu einer hin- und hergehenden Hubbewegung antreibbar ist. Zum Antrieb dient ein rotierend antreibbarer Exzenter, der an einem Stirnende des Pumpenkolbens angeordnet ist und an dessen Umfang der Pumpenkolben mit seinem Stirnende anliegt.

Zur Steuerung einer Durchströmungsrichtung von Bremsflüssigkeit weist die bekannte Kolbenpumpe zwei federbelastete Rückschlagventile auf, deren eines ein Einlassventil und deren anderes ein Auslassventil der Kolbenpumpe bildet. Üblich sind Kugeln als Absperrkörper der Rückschlagventile. Bei der bekannten Kolbenpumpe weist eines der beiden Rückschlagventile einen scheibenförmigen Absperrkörper auf, nämlich das Einlassventil, welches an einem exzenterfernen Stirnende des Pumpenkolbens angeordnet ist.

### Offenbarung der Erfindung

Die erfindungsgemäße Kolbenpumpe mit den Merkmalen des Anspruchs 1 weist ein federbelastetes Rückschlagventil auf, dessen Absperrkörper einen Dämpferkörper aufweist, mit dem zusammen es beweglich ist. Bei einem Öffnen des Rückschlagventils wird der Absperrkörper von einem Ventilsitz des Rückschlagventils abgehoben und der Dämpferkörper bewegt sich mit dem Absperrkörper mit. Zum Schließen beaufschlagt eine Ventilschließfeder den Absperrkörper zusammen mit dem Dämpferkörper gegen den Ventilsitz. Der Absperrkörper ist nicht starr mit dem Dämpferkörper verbunden, sondern er ist in Öffnungs- und Schließrichtung gegenüber dem Dämpferkörper beweglich. Der Dämpferkörper ist in einer Dämpferkammer aufgenommen, die beispielsweise ein Sackloch sein kann, aus der er beim Öffnen des Rückschlagventils Fluid verdrängt. Das Fluid ist das Fluid, das auch von der Kolbenpumpe gefördert wird, bei einer hydraulischen Fahrzeugbremsanlage also Bremsflüssigkeit. Das Fluid kann beispielsweise durch einen oder mehrere Kanäle oder durch einen Spalt zwischen dem Dämpferkörper und einer Wand der Dämpferkammer verdrängt werden. Die Aufzählung ist nicht abschließend. Die Verdrängung von Fluid durch den Dämpferkörper aus der Dämpferkammer beim Öffnen des Rückschlagventils hat die Wirkung, dass eine Öffnungsbewegung des Rückschlagventils gedämpft wird.

Die Unteransprüche haben vorteilhafte Ausgestaltungen und Weiterbildungen der im Anspruch 1 angegebenen Erfindung zum Gegenstand.

Damit sich der Absperrkörper beim Schließen des Rückschlagventils am Ventilsitz ausrichtet ist er quer zur Öffnungs- und Schließrichtung beweglich. Es kann der Absperrkörper gegenüber dem Dämpferkörper (Anspruch 3) und/oder der Dämpferkörper mit dem Absperrkörper quer zur Öffnungs- und Schließrichtung beweglich sein (Anspruch 4).

Insbesondere ist das erfindungsgemäße Rückschlagventil als Auslassventil der Kolbenpumpe vorgesehen (Anspruch 8) und an einem exzenterfernen Ende eines Zylinders der Kolbenpumpe angeordnet.

### Kurze Beschreibung der Zeichnung

Die Erfindung wird nachfolgend anhand in der Zeichnung dargestellter Ausführungsformen näher erläutert. Es zeigen:
- Figur 1: einen Achsschnitt einer Kolbenpumpe gemäß der Erfindung; und
- Figur 2: eine geänderte Ausführungsform der Kolbenpumpe aus Figur 1 gemäß der Erfindung

### Ausführungsformen der Erfindung

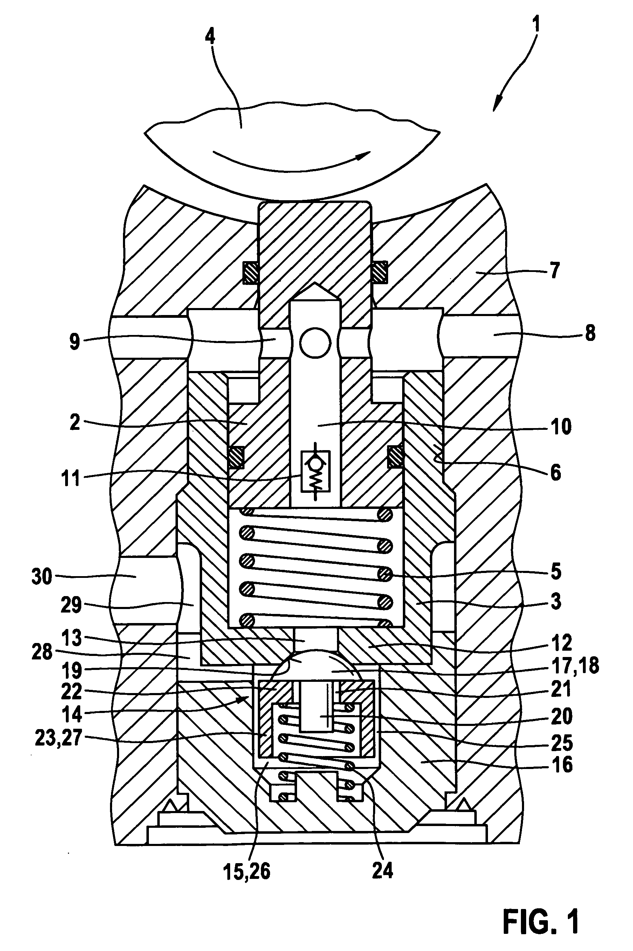

Die in Figur 1 dargestellte, erfindungsgemäße Kolbenpumpe 1 ist als sog. Rückförderpumpe für eine schlupfgeregelte, hydraulische Fahrzeugbremsanlage vorgesehen. Sie weist einen Pumpenkolben 2 auf, der in einem Zylinder 3 axial verschieblich aufgenommen ist. Ein aus dem Zylinder 3 vorstehendes Stirnende des Pumpenkolbens 2 liegt an einem Umfang eines rotierend antreibbaren Exzenters 4 an, der den Pumpenkolben 2 zu einer im Zylinder 3 hin- und hergehenden Hubbewegung antreibt, wenn der Exzenter 4 rotierend angetrieben wird. Eine Kolbenfeder 5, die im Zylinder 3 angeordnet ist, hält den Pumpenkolben 2 in Anlage am Umfang des Exzenters 4.

Der Zylinder 3 ist in eine Pumpenbohrung 6 in einem Pumpengehäuse 7 eingebracht, die Pumpenbohrung 6 führt den Pumpenkolben 2 an einem aus dem Zylinder 3 vorstehenden, exzenternahen Ende axial verschieblich.

Die Kolbenpumpe 1 kann ein separates Pumpengehäuse 7 aufweisen. Bei der dargestellten Ausführungsform der Erfindung wird das Pumpengehäuse 7 von einem Hydraulikblock gebildet, in dem außer der Kolbenpumpe 1 weitere hydraulische Bauelemente wie Magnetventile einer Schlupfregelung der hydraulischen Fahrzeugbremsanlage angeordnet und durch Bohrungen hydraulisch miteinander verschaltet sind. Solche Hydraulikblöcke sind von schlupfgeregelten Fahrzeugbremsanlagen bekannt und sollen hier nicht weiter erläutert werden.

Ein Einlass 8 der Kolbenpumpe 1 erfolgt durch eine Bohrung, die die Pumpenbohrung 6 radial außerhalb des Zylinders 3 kreuzt. Weiter führt der Einlass 8 durch einander kreuzende Radialbohrungen 9 in ein axiales Sackloch 10 im Pumpenkolben 2. Ein in der Zeichnung als Symbol dargestelltes Einlassventil 11 ist in Pumpenkolben 2 integriert oder an dessen im Zylinder 3 befindlichen Stirnende angeordnet. Das Einlassventil 11 ist ein federbelastetes Rückschlagventil.

Der Zylinder 3 weist einen Boden 12 auf, an dem sich die Kolbenfeder 5 abstützt. Der Boden 12 weist ein Mittelloch auf, das einen Durchlass 13 eines Auslassventils 14 der Kolbenpumpe 1 bildet. Das Auslassventil 14 ist in einem Sackloch 15 eines Zylinderkopfes 16 angeordnet, der auf den Boden 12 des Zylinders 13 aufgesetzt ist. Der Zylinderkopf 16 bildet ein Ventilgehäuse des Auslassventils 14.

Das Auslassventil 14 ist ein federbelastetes Rückschlagventil mit einem pilzförmigen Absperrkörper 17. Der Absperrkörper 17 weist einen Kopf 18 mit einer kugelförmigen Fläche auf, die mit einem konischen Ventilsitz 19 zusammenwirkt, die an einer Mündung des Durchlass 13 im Boden 12 des Zylinder 3 ausgebildet ist. An einer flachen Unterseite des Kopfs 18 weist der Absperrkörper 17 einen Schaft 20 auf.

Der Schaft 20 des Absperrkörpers 17 durchgreift ein Mittelloch 21 in einer Stirnwand 22 eines rohrförmigen Dämpferkörpers 23. Der Schaft 20 des Absperrkörpers 17 des Auslassventil 14 weist einen kleineren Durchmesser als Mittelloch 21 in der Stirnwand 22 des Dämpferkörpers 23 auf. Dadurch ist der Absperrkörper 17 quer zu seiner Öffnungs- und Schließrichtung, d. h. radial zum Zylinder 3, beweglich und richtet sich beim Schließen des Auslassventils 14 am Ventilsitz 19 aus. Ein etwaiger Versatz des Durchlass 13 mit dem Ventilsitz 19 in Bezug auf den das Ventilgehäuse bildenden Zylinderkopf 16 wird ausgeglichen.

Eine Ventilschließfeder 24, die in der dargestellten Ausführungsform der Erfindung als Schraubendruckfeder ausgebildet ist, beaufschlagt den Dämpferkörper 23 und über diesen den Absperrkörper 17 gegen den Ventilsitz 19. Die Ventilschließfeder 24 stützt sich an einem Grund des Sacklochs 15 im Zylinderkopf 16 ab.

Verdrängt der Pumpenkolben 2 bei einem Hub in Richtung des Bodens 12 des Zylinders 3 Bremsflüssigkeit aus dem Zylinder 3, wird der Absperrkörper 17 vom Ventilsitz 19 abgehoben und das Auslassventil 14 auf diese Weise geöffnet. Der Dämpferkörper 23 bewegt sich mit dem Absperrkörper 17 mit, wobei der Absperrkörper 17 gegenüber dem Dämpferkörpers 23 beweglich ist. Beim Öffnen des Auslassventils 14 wird der Dämpferkörper 23 in das Sackloch 15 im Zylinderkopf 16 hineingedrückt und verdrängt Bremsflüssigkeit aus dem Sackloch 15 durch einen den Dämpferkörper 23 im Sackloch 15 umgebenden Ringspalt 25. Die Verdrängung von Bremsflüssigkeit aus dem Sackloch 15 bewirkt eine Dämpfung der Öffnungsbewegung des Auslassventils 14. Das Sackloch 15 kann wegen seiner die Öffnungsbewegung des Auslassventils 14 im Zusammenwirken mit dem Dämpferkörper 23 dämpfenden Wirkung auch als Dämpferkammer 26, der Dämpferkörper 23 auch als Dämpferkolben 27 aufgefasst werden.

Durch das Auslassventil 14 aus der Kolbenpumpe 1 verdrängte Bremsflüssigkeit strömt durch radiale Auslasskanäle 28 in eine Ringleitung 29 und von dort in einen Auslass 30, der radial im Pumpengehäuse 7 in die Pumpenbohrung 6 mündet. Der Ringkanal 29 ist zwischen dem Zylinder 3 und der Pumpenbohrung 6 eingeschlossen, er umschließt den Zylinder 3 nahe seines auslassventilseitigen Endes.

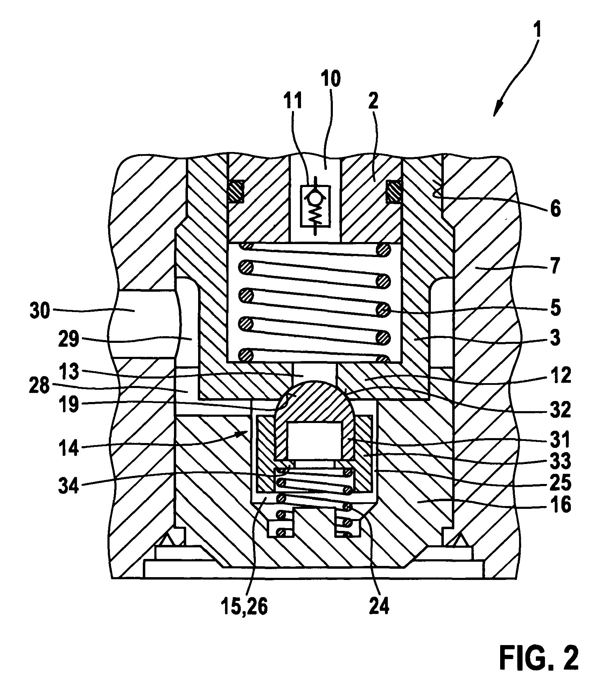

Die Pilzform des Absperrkörpers 17 des Auslassventils 14 ist nicht zwingend für die Erfindung, der Absperrkörper kann beispielsweise auch die Form einer Halbkugel oder Kugel oder eine Scheibe aufweisen. Figur 2 zeigt eine weitere Alternative mit einem zylindrischen Absperrkörper 31, der eine kugelförmige Stirnfläche 32 aufweist, die mit dem konischen Ventilsitz 19 an der Mündung des Durchlass 13 im Boden 12 des Zylinders 3 zusammenwirkt. Bei geschlossenem Auslassventil 14 liegt die kugelförmige Stirnfläche 32 des Absperrkörpers 31 am Ventilsitz 19 an.

Der Absperrkörper 31 ist in einem rohrförmigen Dämpferkörper 33 aufgenommen, der auch als Dämpferkolben aufgefasst werden kann. Der Absperrkörper 31 ist im Dämpferkörper 33 axial verschieblich, d.h. in Öffnungs- und Schließrichtung beweglich. Radial, d. h. quer zur Öffnungs- und Schließrichtung, ist der Absperrkörper 31 im Dämpferkörper 33 im Gegensatz zu Figur 1 nicht beweglich. Radial, d. h. quer zur Öffnungs- und Schließrichtung ist in Figur 2 allerdings der Dämpferkörper 33 und mit ihm zusammen der Absperrkörper 31 beweglich durch Spiel im Sackloch 15 im Zylinderkopf 16, wobei das Sackloch 15 auch hier eine Dämpferkammer 26 bildet. Das Sackloch 15 weist einen größeren Durchmesser als der Dämpferkörper 33 auf, so dass ein den Dämpferkörper 33 umschließender Ringspalt 25 zwischen dem Dämpferkörper 33 und einer Wand des Sacklochs 15 im Zylinderkopf 16 besteht. Dadurch ist eine Ausrichtung der kugelförmigen Stirnfläche 32 des Absperrkörpers 31 am Ventilsitz 19 beim Schließen des Auslassventils 14 möglich. Der Absperrkörper 33 weist einen nach innen stehenden Radialflansch 34 auf, gegen den die Ventilschließfeder 24 drückt.

Wie in Figur 1 wird auch in Figur 2 beim Öffnen des Auslassventils 14 der Absperrkörper 31 zusammen mit dem Dämpferkörper 33 in das Sackloch 15 gedrückt, das die Dämpferkammer 26 bildet. Dabei verdrängt der Dämpferkörper 33 Bremsflüssigkeit durch den ihn umschließenden Ringspalt 25 aus der Dämpferkammer 26, wodurch die Öffnungsbewegung des Auslassventils 14 in gewünschter Weise gedämpft wird.

Mit Ausnahme der erläuterten Unterschiede ist die Kolbenpumpe 1 aus Figur 2 gleich ausgebildet wie die Kolbenpumpe 1 aus Figur 1 und funktioniert in gleicher Weise. Zur Vermeidung von Wiederholungen werden zur Erläuterung der Figur 2 insoweit die oben stehenden Erläuterungen zu Figur 1 in Bezug genommen. Übereinstimmende Bauteile haben in beiden Figuren gleiche Bezugszahlen.

Ein konischer Ventilsitz 19 ist nicht zwingend für die Erfindung. Der Ventilsitz kann beispielsweise auch von einer umlaufenden Kante an der Mündung des Durchlass 13 gebildet sein (nicht dargestellt). Die Aufzählung ist nicht abschließend.

## Patentansprüche

1. Kolbenpumpe für eine hydraulische Fahrzeugbremsanlage, mit einem Pumpenkolben (2), der zu einer hin- und hergehenden Hubbewegung antreibbar ist, und mit mindestens einem federbelasteten Rückschlagventil (14), das eine Durchströmungsrichtung durch die Kolbenpumpe (1) steuert, wobei das Rückschlagventil (14) einen Ventilsitz (19), einen Absperrkörper (17; 31) und eine Ventilschließfeder (24) aufweist, die den Absperrkörper (17; 31) gegen den Ventilsitz (19) beaufschlagt, **dadurch gekennzeichnet, dass** der Absperrkörper (17; 31) einen Dämpferkörper (23; 33) aufweist, mit dem zusammen er beim Öffnen des Rückschlagventils (14) vom Ventilsitz (19) abgehoben und mit dem zusammen er von der Ventilschließfeder (24) gegen den Ventilsitz (19) beaufschlagt wird, dass der Absperrkörper (17; 31) in Öffnungs- und Schließrichtung gegenüber dem Dämpferkörper (17; 31) beweglich ist, dass der Dämpferkörper (23; 33) in einer Dämpferkammer (26) aufgenommen ist, aus der er beim Öffnen des Rückschlagventils (14) Fluid verdrängt, und dass der Absperrkörper (17; 31) quer zu seiner Öffnungs- und Schließrichtung beweglich ist zum Zweck eines Ausrichtens am Ventilsitz (19) beim Schließen des Rückschlagventils (4).

2. Kolbenpumpe nach Anspruch 1, **dadurch gekennzeichnet, dass** die Ventilschließfeder (24) den Dämpferkörper (23; 33) beaufschlagt.

3. Kolbenpumpe nach Anspruch 1, **dadurch gekennzeichnet, dass** der Absperrkörper (17; 31) gegenüber dem Dämpferkörper (23; 33) quer zur Öffnungs- und Schließrichtung beweglich ist.

4. Kolbenpumpe nach Anspruch 1, **dadurch gekennzeichnet, dass** der Dämpferkörper (23; 33) quer zu Öffnungs- und Schließrichtung beweglich ist.

5. Kolbenpumpe nach Anspruch 1, **dadurch gekennzeichnet, dass** der Absperrkörper (17) pilzförmig mit einem Kopf (18), der bei geschlossenem Rückschlagventil (14) am Ventilsitz (19) anliegt, und mit einem Schaft (20) zur Führung des Absperrkörpers (17) ist.

6. Kolbenpumpe nach Anspruch 1, **dadurch gekennzeichnet, dass** der Absperrkörper (31) eine über seine Länge gleichbleibende Querschnittsfläche und eine kugelförmige Stirnfläche (32) aufweist, die bei geschlossenem Rückschlagventil (14) am Ventilsitz (19) anliegt.

7. Kolbenpumpe nach Anspruch 1, **dadurch gekennzeichnet, dass** der Dämpferkörper (23; 33) rohrförmig ist.

8. Kolbenpumpe nach Anspruch 1, **dadurch gekennzeichnet, dass** das Rückschlagventil (14) ein Auslassventil (14) der Kolbenpumpe 1 ist.

## Claims

1. Piston pump for a hydraulic vehicle braking system, with a pump piston (2) which can be driven in a to-and-fro lifting movement, and with at least one spring-loaded nonreturn valve (14) which controls a throughflow direction through the piston pump (1), the nonreturn valve (14) having a valve seat (19), a shut-off body (17; 31) and a valve closing spring (24) which loads the shut-off body (17; 31) against the valve seat (19), **characterized in that** the shut-off body (17; 31) has a damper body (23; 33), together with which it is lifted off from the valve seat (19) during the opening of the nonreturn valve (14) and together with which it is loaded against the valve seat (19) by the valve closing spring (24), **in that** the shut-off body (17; 31) is movable with respect to the damper body (17; 31) in the opening and the closing direction, **in that** the damper body (23; 33) is received in a damper chamber (26), out of which said damper body displaces fluid during the opening of the nonreturn valve (14), and **in that** the shut-off body (17; 31) is movable transversely to its opening and closing direction for the purpose of orientation on the valve seat (19) daring the closing of the nonreturn valve (14).

2. Piston pump according to Claim 1, **characterized in that** the valve closing spring (24) loads the damper body (23; 33).

3. Piston pump according to Claim 1, **characterized in that** the shut-off body (17; 31) is movable with respect to the damper body (23; 33) transversely to the opening and closing direction.

4. Piston pump according to Claim 1, **characterized in that** the damper body (23; 33) is movable transversely to the opening and closing direction.

5. Piston pump according to Claim 1, **characterized in that** the shut-off body (17) is mushroom-shaped with a head (18) which bears against the valve seat (19) when the nonreturn valve (14) is closed, and with a shank (20) for guiding the shut-off body (17).

6. Piston pump according to Claim 1, **characterized in that** the shut-off body (31) has a cross-sectional area constant over its length and a spherical end face (32) which bears against the valve seat (19) when the nonreturn valve (14) is closed.

7. Piston pump according to Claim 1, **characterized in that** the damper body (23; 33) is tubular.

8. Piston pump according to Claim 1, **characterized in that** the nonreturn valve (14) is an outlet valve (14) of the piston pump (1).

## Revendications

1. Pompe à piston pour un système de freinage hydraulique de véhicule, comprenant un piston de pompe (2), qui peut être entraîné en un mouvement de course de va-et-vient et comprenant au moins un clapet anti-retour sollicité par ressort (14), qui commande une direction d'écoulement à travers la pompe à piston (1), le clapet anti-retour (14) présentant un siège de soupape (19), un corps de blocage (17 ; 31) et un ressort de fermeture de soupape (24), qui sollicite le corps de blocage (17 ; 31) contre le siège de soupape (19), **caractérisée en ce que** le corps de blocage (17 ; 31) présente un corps amortisseur (23 ; 33), conjointement avec lequel il est soulevé du siège de soupape (19) lors de l'ouverture du clapet anti-retour (14), et conjointement avec lequel il est sollicité par le ressort de fermeture de soupape (24) contre le siège de soupape (19), **en ce que** le corps de blocage (17 ; 31) peut être déplacé par rapport au corps amortisseur (23 ; 33) dans la direction d'ouverture et de fermeture, **en ce que** le corps amortisseur (23 ; 33) est reçu dans une chambre d'amortissement (26), hors de laquelle il refoule du fluide lors de l'ouverture du clapet anti-retour (14), et **en ce que** le corps de blocage (17 ; 31) peut être déplacé transversalement à sa direction d'ouverture et de fermeture afin de s'aligner avec le siège de soupape (19) lors de la fermeture du clapet anti-retour (14).

2. Pompe à piston selon la revendication 1, **caractérisée en ce que** le ressort de fermeture de soupape (24) sollicite le corps amortisseur (23 ; 33).

3. Pompe à piston selon la revendication 1, **caractérisée en ce que** le corps de blocage (17 ; 31) peut être déplacé transversalement à la direction d'ouverture et de fermeture par rapport au corps amortisseur (23 ; 33).

4. Pompe à piston selon la revendication 1, **caractérisée en ce que** le corps amortisseur (23 ; 33) peut être déplacé transversalement à la direction d'ouverture et de fermeture.

5. Pompe à piston selon la revendication 1, **caractérisée en ce que** le corps de blocage (17) est en forme de champignon avec une tête (18) qui s'applique contre le siège de soupape (19) lorsque le clapet anti-retour (14) est fermé, et avec une tige (20) pour le guidage du corps de blocage (17).

6. Pompe à piston selon la revendication 1, **caractérisée en ce que** le corps de blocage (31) présente une surface en section transversale inchangée sur toute sa longueur et une surface frontale (32) de forme sphérique, qui s'applique contre le siège de soupape (19) lorsque le clapet anti-retour (14) est fermé.

7. Pompe à piston selon la revendication 1, **caractérisée en ce que** le corps amortisseur (23 ; 33) est tubulaire.

8. Pompe à piston selon la revendication 1, **caractérisée en ce que** le clapet anti-retour (14) est une soupape d'échappement (14) de la pompe à piston (1).
